# EUROPÄISCHE PATENTSCHRIFT

(11) **EP 0 794 037 B1**
(45) Veröffentlichungstag und Bekanntmachung des Hinweises auf die Patenterteilung: **20.06.2001**
(21) Anmeldenummer: 97103517.5
(22) Anmeldetag: 04.03.1997
(51) Int. Cl.: B25B 27/00, F16J 15/32

(54) **Werkzeug zur Montage von Wellendichtringen oder dgl.**
Tool for mounting shaft seals or the like
Outil de montage pour joint d'étanchéité ou equivalent

(30) Priorität: 08.03.1996 DE 19608975
(43) Veröffentlichungstag der Anmeldung: 10.09.1997
(73) Patentinhaber: CR Elastomere GmbH, 51379 Leverkusen (DE)
(72) Erfinder: Stephan, Bernd, 42897 Remscheid-Lennep (DE); Engelberth, Wolfgang, 51377 Leverkusen (DE)
(74) Vertreter: Glanz, Werner

(56) Entgegenhaltungen:
- EP-A- 0 272 775
- DE-A- 3 202 381
- DE-C- 4 224 995
- FR-A- 2 598 478
- US-A- 2 405 120

## Beschreibung

Die vorliegende Erfindung betrifft ein Werkzeug zur Montage von Wellendichtringen oder dgl. mit einem zylindrischen Außenkragen und einem Laufring für die Dichtlippe(n) (siehe z.B DE-A-32 02 381).

Es ist bei mit Laufringen für die Dichtlippen versehenen Wellendichtringen bekannt, die Laufringe nach dem Einbau der Wellendichtung in das Gehäuse axial über die Welle in die Dichtung einzuschieben (US-PS 2 405 120). Diese bekannte Methode verlangt einen getrennten Transport und einen getrennten Einbau der Teile.

Durch die EP-PS 0 272 775 ist eine einstückige Transportvorrichtung für Wellendichtungen bekannt, die zwei ringförmige Vorsprünge aufweist, von denen der eine die Dichtlippe radial innen umfaßt und der andere eine zylindrische Außenfläche der Wellendichtung. Mit dieser bekannten Vorrichtung, die die Dichtlippe unter radialer Vorspannung hält, wird die Dichtung auf die Welle und gegen die Gehäusestirnfläche geschoben. Nach dem Befestigen der Wellendichtung am Gehäuse wird die Transportvorrichtung axial abgezogen, so daß die Dichtlippe radial zurückfedern und mit der Wellenmantelfläche in Berührung gebracht werden kann. Diese bekannte Vorrichtung kann nicht für Wellendichtringe, die bereits mit Laufringen versehen sind, verwendet werden, weil dann wegen des in der Bohrung der Dichtlippe(n) angeordneten Laufringes die Vorrichtung bereits vor dem Einführen der Welle abgezogen werden muß. Somit ist eine radiale Zentrierung bei der Befestigung der Wellendichtung im/am Gehäuseblock nicht mehr möglich.

DE-A-32 02 381, das als nachsliegender Stand der Technik angesehen wird, offenbart ein Werkzeug, das für die Montage von Wellendichtringen geeignet ist. Dieses Werkzeug offenbart zwei Teile, die sich gegen einen Verbindungskörper des Wellendichtrings drücken.

Dies gilt auch für sogenannte Gehäuseverschlußdeckel mit integrierem Radialwellendichtring und Durchgangslöchem für Befestigungsschrauben, insbesondere für Kurbelwellen-, Nockenwellen- und Getriebegehäuse für Brennkraftmaschinen.

Die Erfindung hat sich die Aufgabe gestellt, ein Montagewerkzeug für einen Wellendichtring oder dgl., der mit einem Laufring für die Dichtlippe(n) versehen ist, zu schaffen, mit dem bei der Montage der Teile eine exakte Zentrierung erfolgen kann (Siehe auch DE-A-32 02 381). Dazu gehört auch ein sicherer Transport und die Lagerung solcher Maschinenteile.

Gelöst wird diese Aufgabe durch ein Werkzeug mit einer glockenförmigen Ausnehmung mit einer zylindrischen Innenfläche zur Aufnahme des zylindrischen Außenkragens des Wellendichtringes und einer zweiten, abgestuften zylindrischen Innenfläche zur Aufnahme einer zylindrischen Außenfläche des Laufringes. Wellendichtring und Laufring können dabei kraft- und/oder formschlüssig in den Aufnahmeflächen des Werkzeuges gehalten werden.

Nach einem weiteren Merkmal der Erfindung kann das Werkzeug aus Blech durch Tiefziehen hergestellt sein. Das entsprechend stufenförmig ausgebildete Werkzeug kann in einfacher Weise gefertigt werden.

Nach einem weiteren Merkmal der Erfindung kann das Werkzeug auch aus Kunststoff durch Spritzen oder dgl. gefertigt sein.

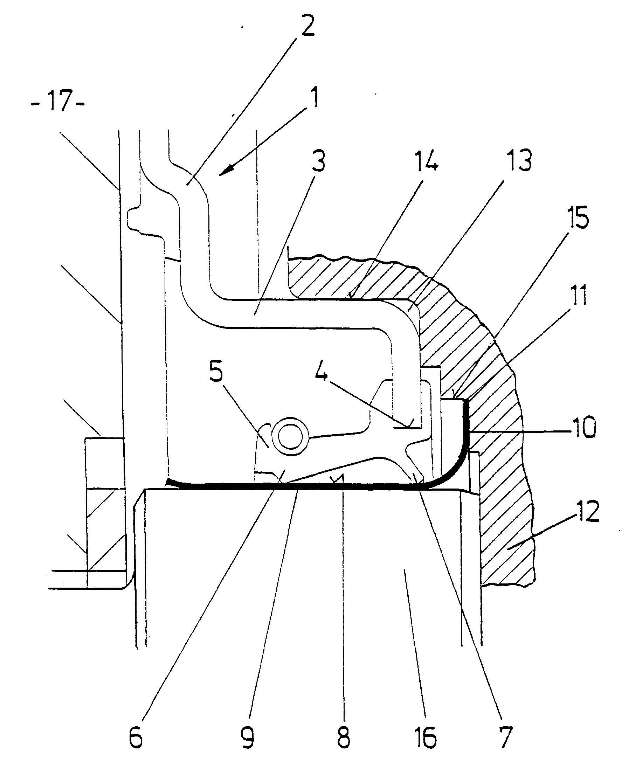

Ein Ausführungsbeispiel der Erfindung ist in der beiliegenden Zeichnung dargestellt. Sie zeigt einen teilweisen Querschnitt durch einen Gehäuseverschlußdeckel mit integriertem Wellendichtring und Laufring sowie dem teilweise geschnittenen Werkzeug.

Der zu montierende Gehäuseverschlußdeckel 1 weist einen metallischen Stützkörper 2 mit einem zylindrischen Außenkragen 3 und eine Bohrung 4 auf, in der der Dichtkörper 5 aus elastomerem Material befestigt ist. Der Dichtkörper 5 besitzt zwei radial nach innen vorstehende Dichtlippen 6 und 7, die auf der Mantelfläche 8 eines aus Blech gefertigten Laufringes 9 anlaufen. Der Laufring 9 ist winkelförmig, d.h. mit einem radial über die Hülse vorstehenden Kragen 10 mit einer zylindrischen Mantelfläche 11, ausgebildet.

Das - nur teilweise dargestellte - Werkzeug 12 ist mit einer glockenförmig ausgebildeten Ausnehmung 13 versehen, mit einer zylindrischen Innenfläche 14 zur Aufnahme des zylindrischen Außenkragens 3 des Gehäuseverschlußdeckels 1 und mit einer zweiten abgestuften zylindrischen Innenfläche 15 zur Aufnahme der zylindrischen Außenfläche 11 des Kragens 10 des Laufringes 9.

Bei der Montage wird der Gehäuseverschlußdeckel 1 mit dem Laufring 9 in das Werkzeug 12 eingesetzt und die Teile werden auf die Welle 16 aufgeschoben. Anschließend wird der Gehäuseverschlußdeckel 1 mit dem Gehäuse 17 z. B. durch - nicht gezeichnete - Befestigungsschrauben befestigt und das Werkzeug 12 abgezogen.

Gehäuseverschlußdeckel 1 und Laufring 9 können bereits beim Hersteller vormontiert und durch das Werkzeug 12 sicher transportiert und gelagert werden. Diese Einheit wird dann in der oben beschriebenen Weise auf die Welle 16 aufgeschoben und das Werkzeug 12 nach Befestigung des Gehäuseverschlußdeckels 1 am Gehäuse 17 abgezogen.

## Patentansprüche

1. Werkzeug zur Montage von Wellendichtringen (1) mit einem zylindrischen Außenkragen (3) und einem Laufring (9) für die Dichtlippe(n) (8,7) mit einer glockenförmigen Ausnehmung (13) mit einer zylindrischen Innenfläche (14) zur Aufnahme des zylindrischen Außenkragens (3) des Wellendichtringes (1) und einer zweiten, abgestuften zylindrischen Innenfläche (15) zur Aufnahme einer zylindrischen Außenfläche (11) des Laufringes (9).

2. Werkzeug nach Anspruch 1, dadurch gekennzeichnet, daß Wellendichtring (1) und/oder Laufring (9) durch Kraftschluß in den Innenflächen (14, 15) gehalten werden kann.

3. Werkzeug nach Anspruch 1, dadurch gekennzeichnet, daß Wellendichtring (1) und/oder Laufring (9) durch Formschluß in den Innenflächen (14, 15) gehalten werden kann.

4. Werkzeug nach einem der Ansprüche 1 bis 3, dadurch gekennzeichnet, daß es als durch Tiefziehen hergestelltes Blechpreßteil ausgebildet ist.

5. Werkzeug nach einem der Ansprüche 1 bis 3, dadurch gekennzeichnet, daß es als Kunststoffspritzteil ausgebildet ist.

## Claims

1. A tool for mounting shaft sealing rings (1), having a cylindrical outer collar (3) and a track ring (9) for the sealing lip(s) (6, 7), with a bell shaped recess (13) having a cylindrical inner surface (14) for receiving the cylindrical outer collar (3) of the shaft sealing ring (1) and a second, stepped cylindrical inner surface (15) for receiving a cylindrical outer surface (11) of the track ring (9).

2. A tool according to Claim 1, characterised in that the shaft sealing ring (1) and/or the track ring (9) can be retained in the inner surface (14, 15) by a force-locking connection.

3. A tool according to Claim 1, characterised in that the shaft sealing ring (1) and/or the track ring (9) can be retained in the inner surface (14, 15) by a form-locking connection.

4. A tool according to any one of Claims 1 to 3, characterised in that it is in the form of a sheet-metal pressed part produced by deep drawing.

5. A tool according to any one of Claims 1 to 3, characterised in that is in the form of a plastics injection-moulded part.

## Revendications

1. Outil pour le montage de garnitures d'étanchéité (1) pour arbres comprenant une collerette extérieure (3) cylindrique et une bague de frottement (9) pour la (les) lèvre(s) d'étanchéité (8, 7), comportant un évidemment (13) en forme de cloche avec une surface intérieure (14) cylindrique pour recevoir la collerette extérieure (3) cylindrique de la garniture d'étanchéité (1) et une deuxième surface intérieure (15) cylindrique étagée pour recevoir une surface extérieure (11) cylindrique de la bague de frottement (9).

2. Outil selon la revendication 1, caractérisé en ce que la garniture d'étanchéité (1) et/ou la bague de frottement (9) peuvent être tenues par serrage dans les surface intérieures (14, 15).

3. Outil selon la revendication 1, caractérisé en ce que la garniture d'étanchéité (1) et/ou la bague de frottement (9) peuvent être tenues par complémentarité de formes dans les surfaces intérieures (14, 15).

4. Outil selon une des revendications 1 à 3, caractérisé en ce qu'il est réalisé sous forme d'élément embouti en tôle obtenu par emboutissage profond.

5. Outil selon une des revendications 1 à 3, caractérisé en ce qu'il est réalisé sous forme d'élément en matière plastique moulé par injection.
